# EUROPÄISCHE PATENTSCHRIFT

(11) **EP 0 873 919 B1**
(45) Veröffentlichungstag und Bekanntmachung des Hinweises auf die Patenterteilung: **31.10.2001**
(21) Anmeldenummer: 98106909.9
(22) Anmeldetag: 16.04.1998
(51) Int. Cl.: B60R 22/46

(54) **Straffer für einen Sicherheitsgurt**
Pretensioner for a safety belt
Prétendeur pour ceinture de sécurité

(30) Priorität: 23.04.1997 DE 29707352 U
(43) Veröffentlichungstag der Anmeldung: 28.10.1998
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Kitzhofer, Thomas, Dipl.-Ing.

(56) Entgegenhaltungen:
- EP-A- 0 558 963
- DE-A- 4 307 062
- DE-U- 9 400 764
- PATENT ABSTRACTS OF JAPAN vol. 017, no. 623 (M-1511), 17. November 1993 & JP 05 193445 A (TAKATA KK), 3. August 1993

## Beschreibung

Die Erfindung betrifft einen Straffer für einen Sicherheitsgurt, mit einer Kolben/Zylinder-Einheit, die einen Zylinder und eine in dessen Innerem angeordneten Kolben umfaßt, einer Druckgasquelle, auf deren Aktivierung hin der Kolben verschoben wird, einer Gurtangriffseinrichtung, die am Sicherheitsgurt angreift, einem Zugübertragungsmittel, welches den Kolben mit der Gurtangriffseinrichtung verbindet und eine Dämpfungseinrichtung zur Absorption von Energie beim Verzögern der Bewegung der Gurtangriffseinrichtung, wobei der Zylinder ein der Gurtangriffseinrichtung näheres, erstes und ein ihr entfernteres, zweites Ende aufweist.

Ein Straffer mit den Merkmalen des Oberbegriffs des Anspruches 1 ist aus JP-A-05 193 445 bekannt.

Straffer für Sicherheitsgurte müssen aufgrund des geringen, im Fahrzeug zur Verfügung stehenden Raumes möglichst klein bauen. Im Inneren oder außerhalb des Zylinders ist üblicherweise eine die axiale Länge des Straffers negativ beeinflussende Dämpfungseinrichtung vorgesehen, die den Kolben am Ende des Straffweges abbremst und dabei Energie absorbiert, wodurch Spannungsspitzen abgebaut werden. Aufgrund der bislang notwendigen Länge von Straffweg und Dämpfungsweg haben bekannte Straffer eine solche axiale Baulänge, daß sie nicht ohne Seilumlenker im Fahrzeug eingebaut werden können.

Die Erfindung schafft einen Straffer, der bei gleichem Straffweg im Vergleich zu bekannten Straffern in axialer Richtung deutlich kürzer ist, ohne daß dies auf Kosten einer verschlechterten Dämpfungswirkung erreicht wird. Dies wird bei einem Straffer der eingangs genannten Art dadurch erreicht, daß der Kolben aus wenigstens zwei Kolbenteilen, nämlich einem ersten, radial äußeren und einem zweiten, radial inneren Kolbenteil besteht, wobei das zweite Kolbenteil beim Verzögern des Kolbens am Ende des Straffvorgangs vom ersten Kolbenteil entkoppelt wird. Durch das Entkoppeln der Kolbenteile beim Verzögern des Kolbens ist es möglich, die Kolbenteile getrennt voneinander zu verzögern und getrennt voneinander für ihre Dämpfung zu sorgen. Demnach können zwei oder mehr Dämpfungseinrichtungen vorgesehen sein, die aufgrund der Entkoppelung der beiden Massen der Kolbenteile relativ klein bauen können, da die zu verzögernde oder zu dämpfende Masse geringer ist als bei einem einteiligen Kolben. Ferner kann der Straffvorgang schneller vonstatten gehen, da die Dämpfungswege für beide zu verzögernde Kolbenteile kürzer sind als dies bislang der Fall ist. Je nachdem, wann die Dämpfung des zweiten Kolbenteils zeitlich auftritt, kann das zweite Kolbenteil auch den gesamten Straffweg ungedämpft durchlaufen und erst anschließend gedämpft und verzögert werden. Das eine geringe Masse aufweisende erste Kolbenteil kann unmittelbar vor dem Ende des Straffweges auf einer kurzen Strecke verzögert werden, so daß die Dämpfungswege für das Verzögern der Kolbenteile fast ausschließlich außerhalb des Straffweges liegen, zeitlich also nach dem Zurücklegen des vollständigen Straffweges durch die Kolbenteile.

Bei der bevozugten Ausführungsform ist jeweils wenigstens ein Anschlag für das erste und das zweite Kolbenteil vorgesehen, wobei der Anschlag für das zweite Kolbenteil dieses zeitlich nach dem Anschlagen des ersten Kolbenteils verzögert. Das bedeutet, daß das erste Kolbenteil bereits verzögert ist, während sich das zweite Kolbenteil noch in Straffrichtung bewegt. Wenn das zweite Kolbenteil mit dem Zugübertragungsmittel und damit auch mit der Gurtangriffseinrichtung gekoppelt ist, kann die Masse des ersten Kolbenteils beim Abbremsen keine Belastung auf die Einheit aus zweitem Kolbenteil, Zugübertragungsmittel und Gurtangriffseinrichtung ausüben, so daß insgesamt die im Zugübertragungsmittel auftretenden Spannungspitzen gering gehalten werden können.

Der Anschlag für das erste Teil kann durch die Stirnwand des Zylinders am zweiten Ende, einen vom Zylindermantel innenseitig abstehenden Vorsprung oder, gemäß einer weiteren bevorzugten Ausführungsform, durch einen konisch sich verjüngenden Mantelabschnitt des Zylinders an dessen zweitem Ende gebildet sein.

Der Anschlag für das zweite Teil kann, räumlich gesehen, in Straffrichtung nach dem Anschlag für das erste Kolbenteil vorgesehen sein oder auch vor ihm. In letzerem Fall schlägt ein mit dem Zugübertragungsmittel verbundenes Teil am Anschlag an, der z.B. die Stirnwand am ersten Ende des Zylinders ist. Durch einen so gestalteten Anschlag kann das zweite Teil und, wenn an ihm das Zugübertragungsmittel sowie die Gurtangriffseinrichtung befestigt sind, die gesamte sich ergebende Einheit gedämpft, also nicht schlagartig verzögert werden.

Bei einer Ausführungsform der Erfindung bewegen sich das zweite Kolbenteil, das Zugübertragungsmittel und die Gurtangriffseinrichtung nach dem Verzögern des ersten Kolbenteils um eine Dämpfungsstrecke weiter und nach deren Verzögern um wenigstens einen Teil der Dämpfungsstrecke entgegen der Straffrichtung zurück.

Dieses Zurückbewegen der Einheit aus zweitem Kolbenteil, Zugübertragungsmittel und Gurtangriffseinrichtung kann durch das Vorverlagern des Fahrzeuginsassen relativ zum Fahrzeug nach dem Straffvorgang erfolgen oder, wenn der Fahrzeuginsasse nicht angegurtet ist, durch ein elastisches Federelement, welches im Inneren des Zylinders angeordnet sein kann und das zweite Kolbenteil und dadurch die Gurtangriffseinrichtung nach Durchlaufen der Dämpfungsstrecke entgegen der Straffrichtung wenigstens eine Teilstrecke zurückbewegt. Das Federelement hat eine Doppelfunktion, indem es einerseits eine Dämpfungswirkung und andererseits eine Rückstellwirkung für das zweite Kolbenteil hat. Wenn die Gurtangriffseinrichtung als Gurtschloß ausgebildet ist, muß nach erfolgter Straffung sichergestellt sein, daß der Fahrzeuginsasse die Lösetaste des Gurtschlosses noch betätigen kann. Dies kann dann problematisch sein, wenn das Gurtschloß z.B. zu tief zwischen dem Rückenteil und dem Sitzteil eines Fahrzeuges eingetaucht ist, wie es bei Straffern für Fahrzeugheckinsassen der Fall sein kann. Das elastische Federelement bewegt das Gurtschloß um eine gewisse Strecke zurück, wodurch der Fahrzeuginsasse die Lösetaste betätigen kann. Dem Drücken der Lösetaste setzt das Federelement einen gewünschten Widerstand entgegen, damit das Gurtschloß eine stabile Stellung einnimmt und nicht verschoben wird.

Bei der bevorzugten Ausführungsform weist die Stirnwand am zweiten Ende des Zylinders eine Öffnung auf oder sie ist vollständig offen, so daß keine eigentliche Stirnwand mehr vorhanden ist. Das Zugübertragungsmittel und/oder das zweite Kolbenteil erstrecken sich, nachdem das zweite Kolbenteil vom ersten Kolbenteil entkoppelt ist, in die Öffnung oder sogar bis außerhalb des Kolbens, wodurch sich axialer Bauraum einsparen läßt. Da der Straffer üblicherweise einige Millimeter oder sogar Zentimeter vor einem fahrzeugseitigen Bauteil angeordnet ist, das üblicherweise durch den Fahrzeugboden oder einen Teppich am Fahrzeugboden gebildet ist, kann im Rückhaltefall dieser Zwischenraum noch zur Verlängerung des Straffweges insgesamt ausgenutzt werden. Das Zugübertragungsmittel oder das zweite Teil können in diesen Zwischenraum teilweise hineinragen und ihn ausfüllen, so daß ein Teil des Dämpfungsweges außerhalb des Zylinders liegen und der innerhalb des Zylinders vom Kolben zurückzulegenden Straffweg verlängert werden kann.

Aufgrund der durch die Erfindung erzielbaren Bauraumeinsparung ist es möglich, den Gurtstraffer ohne Seilumlenker im Fahrzeug unterzubringen.

Die Hülse kann aus Stahl und der Konus aus einem Leichtmetall oder einem leicht umformbaren Buntmetall sein.

Für die Kolbenteile können auch separate Dämpfungseinrichtungen vorgesehen sein.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine erste Ausführungsform des erfindungsgemäßen Straffers in Längsschnittansicht in unbetätigtem Zustand;
Figur 2 den in Figur 1 gezeigten Straffer nach Zurücklegen des gesamten Straffweges;
Figur 3 den in den Figuren 1 und 2 gezeigten Straffer, bei dem sich das Gurtschloß mit dem Zugseil über den Straffweg hinaus in Richtung zum Fahrzeugboden bewegt;
Figur 4 eine Längsschnittansicht einer zweiten Ausführungsform des erfindungsgemäßen Straffers in unbetätigtem Zustand, bei dem das zweite Kolbenteil an die Stirnwand am zweiten Ende des Zylinders anschlagen kann;
Figur 5 eine Längsschnittansicht durch den in Figur 4 gezeigten Straffer nach Zurücklegen des Straffweges, entsprechend dem in Figur 2 dargestellten Zustand;
Figur 6 den in den Figuren 4 und 5 gezeigten Straffer zu einem Zeitpunkt nach Zurücklegen des Straffweges, wenn das Gurtschloß und das Zugseil sich weiter in Richtung Fahrzeugboden bewegt haben, entsprechend dem in Figur 3 dargestellten Zeitpunkt; und
Figuren 7 bis 9 eine weitere Ausführungsform des erfinungsgemäßen Straffers in verschiedenen Phasen, die den in den Figuren 1, 2 und 3 oder 4, 5 und 6 gezeigten Phasen entsprechen, wobei jedoch ein elastisches Federelement im Inneren des Zylinders vorgesehen ist.

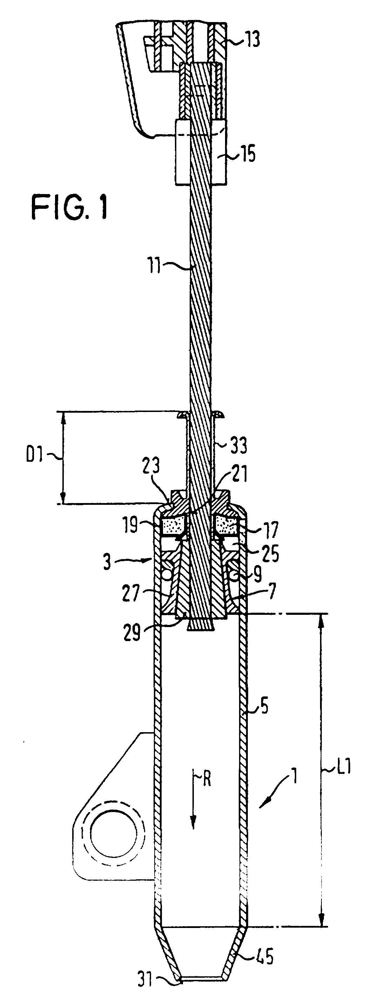

In Figur 1 ist ein Straffer 1, genauer gesagt ein Linearschloßstraffer für einen Sicherheitsgurt (nicht gezeigt) dargestellt. Der Straffer umfaßt eine Kolben/Zylinder-Einheit 3, bestehend aus einem Zylinder 5 und einem im Inneren des Zylinders 5 verschiebbar angeordneten Kolben 7 mit üblichen Sperrelementen 9 auf seiner teilweise konischen Außenkontur. Am Kolben 7 ist ein Zugübertragungsmittel 11 in Form eines Zugseils befestigt, das an seinem gegenüberliegenden Ende an einer Gurtangriffseinrichtung 13 in Form eines Gurtschlosses über eine Seilkausche 15 angebracht ist. Im Inneren des Zylinders ist eine Druckgasquelle 17 an dem der Gurtangriffseinrichtung 13 zugewandten, ersten Ende des Zylinders 5 angeordnet. Die Druckgasquelle 17 hat ein hohles, kreisringförmiges Gehäuse 19, welches mit Treibmittel gefüllt ist. Durch eine zentrische Öffnung 21 im Gehäuse 19 erstreckt sich das Zugübertragungsmittel hindurch bis zum Kolben. Das Gehäuse 19 grenzt an eine Stirnwand 23 des Zylinders 5 an, die als Dichtung zwischen dem Inneren des Zylinders 5 und dem Äußeren dient. Zwischen dem Kolben 7 und der dem Kolben 7 näheren Stirnwand des Gehäuses 19 ist ein Arbeitsraum 25 gebildet, in den nach Zünden des Treibmittels im Inneren der Druckgasquelle 17 Gas strömt, was zu einer Verschiebung des Kolbens 7 zusammen mit dem Zugübertragungsmittel 11 und dem Gurtschloß 13 in Straffrichtung R führt. Mit L1 ist der maximale Straffweg bezeichnet.

Der in Figur 1 gezeigte Straffer baut in axialer Richtung sehr kurz. Dies wird einerseits dadurch erreicht, daß das Zugübertragungsmittel 11 im Vergleich zur Länge des Zylinders 5 so kurz ausgebildet ist, daß die Seilkausche 15 im Rückhaltefall in das Innere des Zylinders eindringt und dabei die als separat ausgebildetes Teil, mit dem Zylinder 5 formschlüssig verbundende Stirnwand 23 am ersten Ende des Zylinders in dessen Inneres schiebt. Ferner sind sehr klein bauende Dämpfungseinrichtungen vorgesehen, die zu keiner wesentlichen axialen Bauraumvergrößerung des Straffers führen. Diese Dämpfungseinrichtungen wirken auf unterschiedliche Teile. Der Kolben 7 ist aus mehreren Kolbenteilen zusammengesetzt, nämlich aus einem ersten, radial äußeren Kolbenteil 27 in Form einer Stahlhülse und einem zweiten, radial inneren Kolbenteil 29 in Form eines Aluminiumkonus. Das erste Kolbenteil 27 hat eine zentrische Öffnung, die der Form des Konus 29 exakt angepaßt ist, so daß zwischen den beiden Teilen kein Gas strömen kann. Das zweite Kolbenteil 29 ist mit dem Zugübertragungsmittel 11 verbunden, welches am unteren Ende noch gegenüber dem zweiten Kolbenteil axial geringfügig vorsteht. Auch zwischen dem zweiten Kolbenteil 29 und dem Zugübertragungsmittel 11 kann es zu keinen Leckgasströmen kommen, wenn Druckgas in den Arbeitsraum 25 des Zylinders strömt. Da sich das zweite Kolbenteil 29 zum ersten Ende des Zylinders 5 hin verjüngt, bleiben beide Kolbenteile 27, 29 beim Einströmen von Gas in den Arbeitsraum 25 miteinander verbunden, und der gesamte Kolben 7 bewegt sich in Richtung zum zweiten Ende des Zylinders 5.

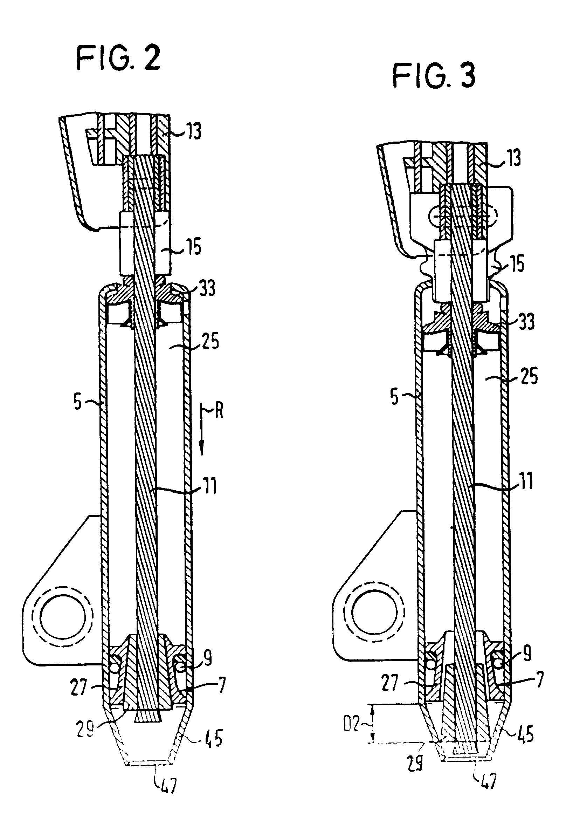

Der Zylinder 5 hat an seinem zweiten Ende einen sich konisch verjüngenden Mantelabschnitt 45, dessen Übergang zum kreiszylindrischen Mantelabschnitt einen Anschlag für das erste Kolbenteil 27 und damit die Begrenzung des Straffweges L1 bildet. Bevor das Kolbenteil 27 an den Übergang zwischen kreiszylindrischem und sich verjüngendem Mantelabschnitt 45 des Zylinders 5 stößt, wird eine an der Stirnwand 23 am ersten Ende des Zylinders 5 angeformte Hülse 33 durch das Auftreffen der Seilkausche 15 plastisch über die Dämpfungsstrecke D1 verformt und absorbiert Energie. Diese Hülse 33 wirkt zusammen mit der Seilkausche als erste Dämpfungseinrichtung. Ferner kann der sich verjüngende Mantelabschnitt 45 durch das auf ihn auftreffende erste Kolbenteil 27 auch geringfügig plastisch verformt werden und als zweite Dämpfungseinrichtung wirken. Mit dem Verzögern des ersten Kolbenteils 27 beim Auftreffen auf den sich verjüngenden Mantelabschnitt 45 entkoppelt sich das zweite Kolbenteil 29 vom ersten aufgrund der trägen Masse von zweitem Kolbenteil 29, Zugübertragungsmittel 11 und Gurtangriffseinrichtung 13. Die dadurch entstehende Einheit bewegt sich weiter nach unten (vergleiche Figur 3), bis das zweite Kolbenteil 29 schließlich am Mantelabschnitt 45 anschlägt. Wird das zweite Kolbenteil 29 vom ersten Kolbenteil 27 zu dem in Figur 2 gezeigten Zeitpunkt entkoppelt oder kurz danach, reißt die Seilkausche 15 die Stirnwand 23 aus ihrer Befestigung am Zylinder 5 und schiebt sie in das Innere des Zylinders 5, wie in Figur 3 gezeigt. Dadurch wird das im Arbeitsraum 25 befindliche Gas komprimiert und über die entstehende Öffnung zwischen erstem und zweitem Kolbenteil 27, 29 ins Freie geblasen, da der Zylinder eine offene Stirnwand am zweiten Ende aufweist.

Die ins Innere des Kolbens geschobene Stirnwand 23 wirkt zusammen mit dem Gehäuse 19 als Dämpfungskolben und wie eine pneumatische Dämpfungseinrichtung. Wenn das zweite Kolbenteil 29 am Mantelabschnitt 45 anschlägt, kann der Mantelabschnitt 45 oder das zweite Kolbenteil 29 noch geringfügig deformiert werden und zur Dämpfung beitragen. Da das zweite Kolbenteil 29 aus Aluminium ist, kann es stark plastisch verformt werden, wenn es auf den Mantelabschnitt 45 trifft und dadurch sehr viel Energie absorbieren. Neben einem Leichtmetall kann das zweite Kolbenteil 29 auch aus einem leicht umformbaren Buntmetall wie Messing oder Kupfer bestehen. Das gegenüber dem zweiten Kolbenteil 29 nach unten vorstehende Ende des Zugübertragungsmittels ragt in die Öffnung 47 der unteren Stirnwand des Zylinders, welche durch den Mantelabschnitt 45 gebildet ist, hinein oder sogar aus ihr heraus und kann sich bis zum Fahrzeugboden erstrecken. Da die durch die Dämpfungsstrecke D2 gekennzeichnete Dämpfung erst zeitlich nach dem Verzögern des ersten Kolbenteils 27 auftritt, wenn beide Kolbenteile voneinander entkoppelt sind, werden diese Kolbenteile durch teilweise unterschiedliche Dämpfungseinrichtungen verzögert. Die gesamte Masse jedes abzubremsenden Teiles ist dadurch gering, so daß die Dämpfungseinrichtungen klein bauen können. Durch das Entkoppeln der beiden Kolbenteile voneinander wirkt die Masse des ersten Kolbenteils zusammen mit den Sperrkörpern 9 nicht auf das Zugübertragungsmittel 11 beim Verzögern ein, wodurch, wie es auch angestrebt ist, die Belastung auf das Zugübertragungsmittel gering gehalten werden kann und Spannungsspitzen vermieden werden. Da die Dämpfungsstrecke D2 ferner zeitlich nach dem Zurücklegen des gesamten Straffweges durchschritten wird, kann dieser schnell vom Kolben 7 zurückgelegt werden.

Der sich nach vollendeter Gurtstraffung nach vorn verlagernde Fahrzeuginsasse drückt das Gurtschloß 13 zusammen mit dem zweiten Kolbenteil zurück in die in Figur 2 gezeigte Lage, jedoch nicht weiter, da die Sperrkörper 9 ein weiteres Zurückschieben des Kolbens 7 entgegen der Straffrichtung R verhindern.

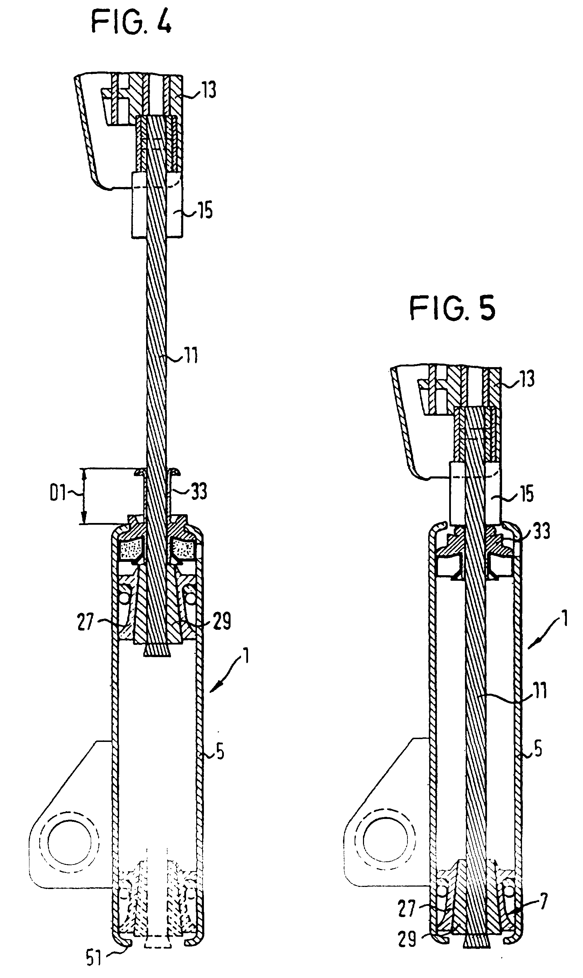

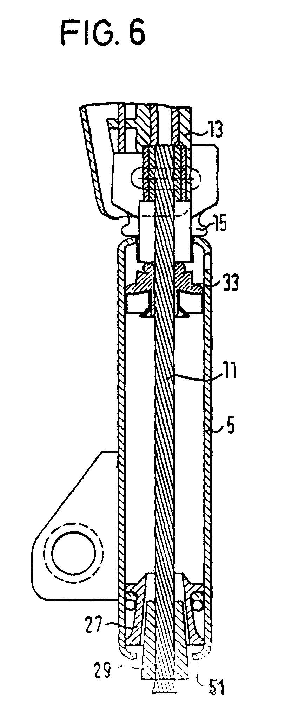

Bei der in den Figuren 4 bis 6 gezeigten Ausführungsform des Straffers ist der Zylinder 5 kürzer als der in den Figuren 1 bis 3 dargestellten Ausführungsformen, da das zweite Kolbenteil 29 nach vollendeter Straffung (Figur 5) durch die offene Stirnwand 51 des Zylinders teilweise hindurchtritt (vgl. Figur 6). Die Dämpfungsstrecke D2 liegt somit vollständig außerhalb des Zylinders, im Raum zwischen Zylinder und einer Störkontur im Fahrzeug, die bei bekannten Gurtstraffern ungenutzt bleibt. Bei der in den Figuren 4 bis 6 dargestellten Ausführungsform bildet die Stirnwand 51 den Anschlag für das erste Kolbenteil 27.

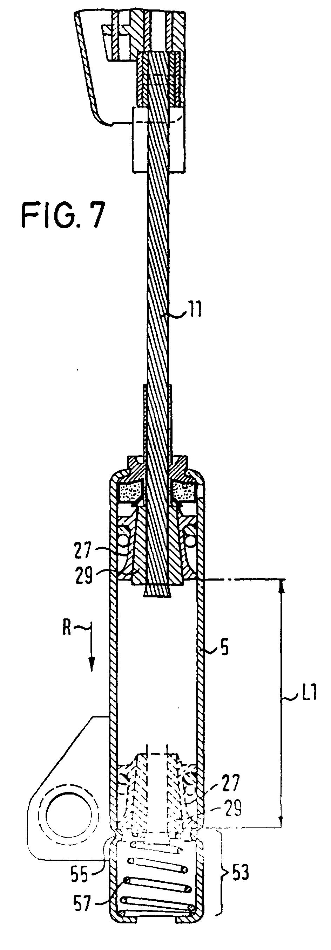

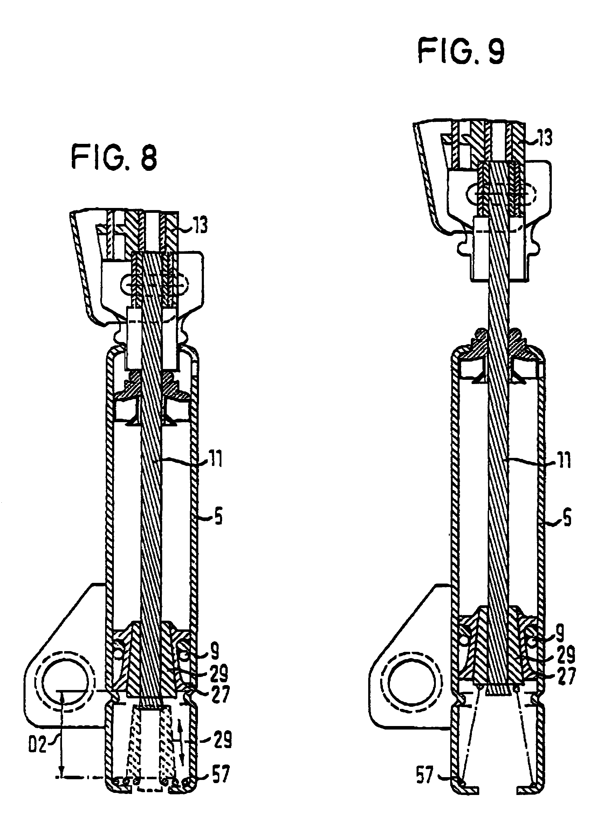

Die in den Figuren 7 bis 9 dargestellte Ausführungsform des Straffers unterscheidet sich von der in den Figuren 4 bis 6 dargestellten dadurch, daß der Zylinder 5 um einen Abschnitt 53 verlängert ist, in den sich das zweite Kolbenteil 29 nach Lösen von dem ersten Kolbenteil 27 hineinbewegt. Eine Einbuchtung bildet den Anschlag 55 für das erste Kolbenteil 27. Ein elastisches Federelement 57 in Form einer Kegelfeder dient einerseits in geringem Maße der Dämpfung des Zugübertragungsmittels 11, wenn sich das zweite Kolbenteil 29 vom ersten löst (siehe die untere Stellung des Kolbens 7 in Figur 7). Andererseits stellt das Federelement 57, wenn sich das zweite Kolbenteil um die Dämpfungsstrecke D2 (vergleiche Figur 8) gegenüber dem ersten Dämpfungsteil 27 in Straffrichtung R bewegt hat, zurück zur Anlage an das erste Kolbenteil 27. Wenn der Fahrzeuginsasse nach erfolgter Straffung den Sicherheitsgurt ablegen will, setzt das elastische Federelement 53 einer Verschiebung des Gurtschlosses einen Widerstand entgegen, so daß es ausgeschlossen ist, daß die Entriegelungstaste am Gurtschloß 13 wegen der leichten Verschiebbarkeit des Gurtschlosses nicht mehr betätigt werden kann. Dies betrifft insbesondere Straffer, die an einer Rücksitzbank angeordnet sind und sich zwischen dem Sitz- und dem Rückenpolster nach dem Straffvorgang befinden würden. Das elastische Federelement 57 führt das zweite Kolbenteil 29 nach erfolgter Straffung in die in Figur 9 gezeigte Lage zurück. Gegenüber der in Figur 8 dargestellen Stellung ist zu sehen, daß, bis die Sperrkörper 9 wirken, noch eine geringfügige Verschiebung des gesamten Kolbens entgegen der Straffrichtung R möglich ist.

## Patentansprüche

1. Straffer für einen Sicherheitsgurt, mit einer Kolben/Zylinder-Einheit (3), die einen Zylinder (5) und einen in dessen Innerem angeordneten Kolben (7) umfaßt, einer Druckgasquelle (17), auf deren Aktivierung hin der Kolben (7) verschoben wird, einer Gurtangriffseinrichtung (13), die am Sicherheitsgurt angreift, einem Zugübertragungsmittel (11), welches den Kolben (7) mit der Gurtangriffseinrichtung (13) verbindet, und wenigstens einer Dämpfungseinrichtung zur Absorption von Energie beim Verzögern der Bewegung der Gurtangriffseinrichtung (13), wobei der Zylinder (5) ein der Gurtangriffseinrichtung (13) näheres, erstes und ein ihr entfernteres, zweites Ende aufweist, **dadurch gekennzeichnet, daß** der Kolben (7) aus wenigstens zwei Kolbenteilen besteht, nämlich einem ersten, radial äußeren und einem zweiten, radial inneren Kolbenteil (27, 29), wobei das zweite Kolbenteil (29) beim Verzögern des Kolbens (7) am Ende des Straffvorgangs vom ersten Kolbenteil (27) entkoppelt wird.

2. Straffer nach Anspruch 1, **gekennzeichnet durch** jeweils wenigstens einen Anschlag (55) für das erste und das zweite Kolbenteil (27, 29), wobei der Anschlag für das zweite Kolbenteil (29) diesen zeitlich nach dem Anschlagen des ersten Kolbenteils (27) an dessen zugeordnetem Anschlag verzögert.

3. Straffer nach Anspruch 2, **dadurch gekennzeichnet, daß** der Anschlag für das erste Kolbenteil (27) durch die Stirnwand (45, 51) des Zylinders (5) am zweiten Ende gebildet ist.

4. Straffer nach Anspruch 2 oder 3, **dadurch gekennzeichnet, daß** der Anschlag (55) für das erste Kolbenteil (27) ein vom Zylindermantel innenseitig abstehender Vorsprung ist.

5. Straffer nach Anspruch 4, **dadurch gekennzeichnet, daß** der Vorsprung durch Eindrücken des Zylindermantels gebildet ist.

6. Straffer nach einem der vorstehenden Ansprüche, **dadurch gekennzeichnet, daß** das zweite Kolbenteil (29) mit dem Zugübertragungsmittel (11) verbunden ist.

7. Straffer nach einem der Ansprüche 1, 2, 4, 5 oder 6, **dadurch gekennzeichnet, daß** der Anschlag für das zweite Kolbenteil (29) durch die Stirnwand (51) des Zylinders (5) am zweiten Ende gebildet ist.

8. Straffer nach einem der Ansprüche 1, 2, 4, 5 oder 6, **dadurch gekennzeichnet, daß** der Anschlag für das zweite Kolbenteil (29) durch einen konischen, sich verjüngenden Mantelabschnitt (45) des Zylinders (5) an dessen zweitem Ende gebildet ist.

9. Straffer nach einem der vorstehenden Ansprüche, **dadurch gekennzeichnet, daß** die Bewegung des zweiten Kolbenteils (29) durch Anschlagen eines mit dem Zugübertragungsmittel (11) verbundenen Teiles (15) an der Stirnwand (23) am ersten Ende des Zylinders (5) verzögert wird.

10. Straffer nach Anspruch 9, **dadurch gekennzeichnet, daß** die Bewegung des zweiten Kolbenteils (29) durch das Anschlagen des mit dem Zugübertragungsmittel (11) verbundenen Teiles (15) an der Stirnwand (23) am ersten Ende begrenzt wird.

11. Straffer nach Anspruch 9 oder 10, **dadurch gekennzeichnet, daß** das mit dem Zugübertragungsmittel (11) verbundene Teil das Gehäuse der Gurtangriffseinrichtung (13) ist.

12. Straffer nach einem der Ansprüche 9 bis 11, **dadurch gekennzeichnet, daß** die Gurtangriffseinrichtung (13) ein Gurtschloß und das Zugübertragungsmittel (11) ein Zugseil ist.

13. Straffer nach einem der vorstehenden Ansprüche, **dadurch gekennzeichnet, daß** an der Mantelfläche des ersten Kolbenteils (27) außenseitig Sperrkörper (9) anliegen, die eine Bewegung des ersten Kolbenteils (27) entgegen der Straffrichtung (R) verhindern.

14. Straffer nach einem der vorstehenden Ansprüche, **dadurch gekennzeichnet, daß** sich das zweite Kolbenteil (29), das Zugübertragungsmittel (11) und die Gurtangriffseinrichtung (13) nach dem Verzögern des ersten Kolbenteils (27) um eine Dämpfungsstrecke (D2) weiterbewegen und nach ihrem Verzögern um wenigstens einen Teil der Dämpfungsstrecke (D2) wieder entgegen der Straffrichtung (R) zurückbewegt werden können.

15. Straffer nach Anspruch 14, **dadurch gekennzeichnet, daß** sich das zweite Kolbenteil (29) bis zum Anschlag an das erste Kolbenteil (27) zurückbewegt.

16. Straffer nach Anspruch 13 oder 14, **gekennzeichnet durch** ein elastisches Federelement (57) im Inneren des Zylinders (5), welches das zweite Kolbenteil (29) und **dadurch** die Gurtangriffseinrichtung (13) nach zurückgelegter Dämpfungsstrecke (D2) entgegen der Straffrichtung (R) zumindest um einen Teil der Dämpfungsstrecke (D2) zurückbewegt.

17. Straffer nach Anspruch 16, **dadurch gekennzeichnet, daß** das Federelement (57) eine Kegelfeder ist.

18. Straffer nach einem der vorstehenden Ansprüche, **dadurch gekennzeichnet, daß** das zweite Kolbenteil (29) ein sich zum ersten Ende des Zylinders (5) hin verjüngender Konus und das erste Kolbenteil (27) eine Hülse mit einer zur Außenkontur des Konus komplementären Öffnung zur Aufnahme des Konus ist.

19. Straffer nach Anspruch 18, **dadurch gekennzeichnet, daß** während des Straffvorgangs der Konus die Öffnung gasdicht verschließt.

20. Straffer nach Anspruch 18 oder 19, **dadurch gekennzeichnet, daß** sich der Konus nach dem Verzögern der Hülse aus deren Öffnung bewegt und wenigstens einen Teil der Öffnung freigibt.

## Claims

1. A tensioner for a safety belt, with a piston/cylinder unit (3), which comprises a cylinder (5) and a piston (7) arranged in its interior, with a compressed gas source (17), on the activation of which said piston (7) is displaced, with a belt engagement means (13) which engages the safety belt, with a traction transfer means (11) which connects said piston (7) to said belt engagement means (13), and with at least one damping means for the absorption of energy on deceleration of the movement of said belt engagement means (13), said cylinder (5) having a first end nearer to said belt engagement means (13) and a second end further away therefrom, **characterized in that** said piston (7) consists of at least two piston parts, namely of a first, radially outer piston part (27) and a second, radially inner piston part (29), said second piston part (29) being uncoupled from said first piston part (27) on deceleration of said piston (7) at the end of the tensioning process.

2. The tensioner according to Claim 1, **characterized by** at least one stop (55) for the first and, respectively, the second piston parts (27, 29), the stop for said second piston part (29) decelerating the latter chronologically after the striking of said first piston part (27) on its associated stop.

3. The tensioner according to Claim 2, **characterized in that** the stop for said first piston part (27) is formed by the end wall (45, 51) of said cylinder (5) at the second end.

4. The tensioner according to Claim 2 or 3, **characterized in that** said stop (55) for said first piston part (27) is a projection protruding from the inside of the cylinder shell.

5. The tensioner according to Claim 4, **characterized in that** the projection is formed by pressing the cylinder shell inwards.

6. The tensioner according to any of the preceding Claims, **characterized in that** said second piston part (29) is connected to said traction transfer means (11).

7. The tensioner according to any of the Claims 1, 2, 4, 5 or 6, **characterized in that** the stop for said second piston part (29) is formed by said end wall (51) of said cylinder (5) at the second end.

8. The tensioner according to any of the Claims 1, 2, 4, 5 or 6, **characterized in that** the stop for said second piston part (29) is formed by a conical, tapering shell section (45) of the cylinder (5) at its second end.

9. The tensioner according to any of the preceding Claims, **characterized in that** the movement of said second piston part (29) is decelerated by the striking of a part (15), connected to the traction transfer means (11), on the end wall (23) at the first end of said cylinder (5).

10. The tensioner according to Claim 9, **characterized in that** the movement of said second piston part (29) is limited by the striking of said part (15), connected to said traction transfer means (11), on said end wall (23) at the first end.

11. The tensioner according to Claim 9 or 10, **characterized in that** the part connected to said traction transfer means (11) is the housing of said belt engagement means (13).

12. The tensioner according to any of the Claims 9 to 11, **characterized in that** said belt engagement means (13) is a belt buckle and said traction transfer means (11) is a traction cable.

13. The tensioner according to any of the preceding Claims, **characterized in that** locking members (9) abut against the shell surface of said first piston part (27) on the outer side, which locking members (9) prevent a movement of said first piston part (27) contrary to the tensioning direction (R).

14. The tensioner according to any of the preceding Claims, **characterized in that** said second piston part (29), said traction transfer means (11) and said belt engagement means (13) move on by a damping way (D2) after the deceleration of said first piston part (27), and after their deceleration they can be moved back again by at least a portion of said damping way (D2) contrary to said tensioning direction (R).

15. The tensioner according to Claim 14, **characterized in that** said second piston part (29) moves back until it strikes against said first piston part (27).

16. The tensioner according to Claim 13 or 14, **characterized by** an elastic spring element (57) in the interior of said cylinder (5), which moves back said second piston part (29) and thereby said belt engagement means (13) contrary to said tensioning direction (R) at least by a portion of said damping way (D2), after said damping way (D2) is covered.

17. The tensioner according to Claim 16, **characterized in that** said spring element (57) is a conical spring.

18. The tensioner according to any of the preceding claims, **characterized in that** said second piston part (29) is a cone tapering towards the first end of said cylinder (5) and that said first piston part (27) is a sleeve for receiving the cone, the sleeve having an opening complementary to the outer contour of the cone.

19. The tensioner according to Claim 18, **characterized in that** the cone closes the opening in a gas-tight manner during the tensioning process.

20. The tensioner according to Claim 18 or 19, **characterized in that** after deceleration of the sleeve, the cone moves out from the opening in the sleeve and frees at least part of the opening.

## Revendications

1. Tendeur pour une ceinture de sécurité, comprenant un ensemble piston-cylindre (3) constitué d'un cylindre (5) et d'un piston (7) disposé à l'intérieur de celui-ci, une source de gaz comprimé (17) qui, une fois activée, déplace le piston (7), un dispositif de saisie de ceinture (13) qui saisit la ceinture de sécurité, un moyen de transmission de traction (11) qui relie le piston (7) au dispositif de saisie de ceinture (13), et au moins un dispositif d'amortissement pour absorber de l'énergie lors de la décélération du dispositif de saisie de ceinture (13), le cylindre (5) comportant une première extrémité, qui est plus proche du dispositif de saisie de ceinture (13), et une deuxième extrémité qui en est plus éloignée, **caractérisé en ce que** le piston (7) est constitué d'au moins deux parties de piston (27, 29), à savoir d'une première partie de piston radialement extérieure et d'une deuxième partie de piston radialement intérieure, la deuxième partie de piston (29) étant dissociée de la première partie de piston (27) lors de la décélération du piston (7) au terme de la mise en tension.

2. Tendeur selon la revendication 1, **caractérisé par** au moins une butée (55) pour chacune des première et deuxième parties de piston (27, 29), la butée pour la deuxième partie de piston (29) retardant celle-ci une fois que la première partie de piston (27) est venue au contact de la butée qui lui est associée.

3. Tendeur selon la revendication 2, **caractérisé en ce que** la butée pour la première partie de piston (27) est formée par la paroi frontale (45, 51) du cylindre (5) située à la deuxième extrémité.

4. Tendeur selon la revendication 2 ou 3, **caractérisé en ce que** la butée (55) pour la première partie de piston (27) est une saillie qui dépasse intérieurement de la surface périphérique du cylindre.

5. Tendeur selon la revendication 4, **caractérisé en ce que** la saillie est formée par enfoncement de la surface périphérique du cylindre.

6. Tendeur selon l'une des revendications précédentes, **caractérisé en ce que** la deuxième partie de piston (29) est reliée au moyen de transmission de traction (11).

7. Tendeur selon l'une des revendications 1, 2, 4, 5 ou 6, **caractérisé en ce que** la butée pour la deuxième partie de piston (29) est formée par la paroi frontale (51) du cylindre (5) située à la deuxième extrémité.

8. Tendeur selon l'une des revendications 1, 2, 4, 5 ou 6, **caractérisé en ce que** la butée pour la deuxième partie de piston (29) est formée par une portion périphérique conique rétrécie (45) du cylindre (5) située à la deuxième extrémité de celui-ci.

9. Tendeur selon l'une des revendications précédentes, **caractérisé en ce que** le déplacement de la deuxième partie de piston (29) est ralenti par le contact d'une partie (15), reliée au moyen de transmission de traction (11), contre la paroi frontale (23) située à la première extrémité du cylindre (5).

10. Tendeur selon la revendication 9, **caractérisé en ce que** le déplacement de la deuxième partie de piston (29) est limité par le contact de la partie (15), reliée au moyen de transmission de traction (11), contre la paroi frontale (23) située à la première extrémité.

11. Tendeur selon la revendication 9 ou 10, **caractérisé en ce que** la partie reliée au moyen de transmission de traction (11) est le boîtier du dispositif de saisie de ceinture (13).

12. Tendeur selon l'une des revendications 9 à 11, **caractérisé en ce que** le dispositif de saisie de ceinture (13) est une serrure de ceinture, et le moyen de transmission de traction (11) est un câble de traction.

13. Tendeur selon l'une des revendications précédentes, **caractérisé en ce que** des corps d'arrêt (9) empêchant la première partie de piston (27) de se déplacer à l'opposé du sens de mise en tension (R) sont appliqués extérieurement contre la surface périphérique de la première partie de piston (27).

14. Tendeur selon l'une des revendications précédentes, **caractérisé en ce que**, après la décélération de la première partie de piston (27), la deuxième partie de piston (29), le moyen de transmission de traction (11) et le dispositif de saisie de ceinture (13) poursuivent leur déplacement sur une distance d'amortissement (D2) et, après leur décélération, peuvent être repoussés à l'opposé du sens de mise en tension (R) sur au moins une partie de la distance d'amortissement (D2).

15. Tendeur selon la revendication 14, **caractérisé en ce que** la deuxième partie de piston (29) est repoussée jusqu'à son contact avec la première partie de piston (27).

16. Tendeur selon la revendication 13 ou 14, **caractérisé par** un élément élastique formant ressort (57) qui est disposé à l'intérieur du cylindre (5) et qui, une fois la distance d'amortissement (D2) parcourue, repousse la deuxième partie de piston (29) et donc le dispositif de saisie de ceinture (13) d'au moins une partie de la distance d'amortissement (D2) à l'opposé du sens de mise en tension (R).

17. Tendeur selon la revendication 16, **caractérisé en ce que** l'élément formant ressort (57) est un ressort conique.

18. Tendeur selon l'une des revendications précédentes, **caractérisé en ce que** la deuxième partie de piston (29) est un cône qui se rétrécit vers la première extrémité du cylindre (5), et la première partie de piston (27) est un fourreau pourvu, pour recevoir le cône, d'un orifice complémentaire au contour extérieur du cône.

19. Tendeur selon la revendication 18, **caractérisé en ce que**, durant la mise en tension, le cône bouche l'orifice de manière étanche aux gaz.

20. Tendeur selon la revendication 18 ou 19, **caractérisé en ce que**, après la décélération du fourreau, le cône sort de l'orifice de celui-ci et libère au moins une partie dudit orifice.
